# EUROPEAN PATENT APPLICATION

(11) **EP 1 271 946 A1**
(43) Date of publication of application: **02.01.2003**
(21) Application number: 01904547.5
(22) Date of filing: 19.02.2001
(51) Int. Cl.: H04N 5/91, H04N 5/92

(54) **VIDEO RECORDER/PLAYER, AND METHOD OF VIDEO RECORDING AND PLAYBACK**

(30) Priority: 21.02.2000 JP 2000043420
(71) Applicant: Sanyo Electric Co., Ltd., Moriguchi-shi, Osaka 570-8677 (JP)
(72) Inventor: MIYATA, Kazunori, Neyagawa-shi, Osaka 572-0803 (JP)
(74) Representative: Glawe. Delfs. Moll
(86) International application number: JP0101176
(87) International publication number: WO01061998

(57) **Abstract**

A video recorder/reproducer comprises means for recording an image recording mode, together with compressed image data obtained by an image compression/expansion device, on a recording medium at the time of recording, and means for reading out the image recording mode, together with the compressed image data, from the recording medium at the time of reproduction, and expanding, when the read image recording mode is a field recording mode, the read compressed image data in a field expansion mode by the image compression/expansion device, while expanding, when the read image recording mode is a frame recording mode, the read image compressed data in a frame expansion mode by the image compression/expansion device.

## Description

### Technical Field

The present invention relates to a video recorder/reproducer such as a digital VTR and a video recording/reproducing method.

### Background Art

A video recorder/reproducer for compressing a video picked up by a monitoring camera using a JPEG system image compression/expansion device, for example, then recording the compressed video on a video tape, and reading data representing the video recorded on the video tape, then expanding the read data using the image compression/expansion device, and outputting the expanded data has already been developed.

Examples of this type of video recorder/reproducer include one capable of selecting a field recording mode and a frame recording mode as an image recording mode. When the image recording mode is set to the field recording mode at the time of recording, an inputted image is compressed in a field compression mode (a compression mode for each field) by the image compression/expansion device, and is then recorded on the video tape. When the image recording mode is set to the frame recording mode at the time of recording, the input image is compressed in a frame compression mode (a compression mode for each frame) and is then recorded on the video tape.

When the compressed image data recorded on one video tape in the field recording mode and the compressed image data recorded thereon in the frame recording mode are mixed with each other, the compressed image data read out of the video tape must be expanded in the image expansion mode corresponding to the image recording mode in a case where the compressed image data is recorded at the time of reproduction. Even if the image recording mode in which the compressed image data read out of the video tape is recorded is changed, the video recorder/reproducer cannot recognize that the image recording mode is changed, however, normal reproduction cannot be performed.

An object of the present invention is to provide a video recorder/reproducer and a video recording/reproducing method, in which an image expansion mode can be automatically switched even when the image recording mode in which compressed image data read out of a recording medium is recorded is changed at the time of reproduction, thereby making continuous reproduction possible.

### Disclosure of Invention

In a video recorder/reproducer, in which there are a field recording mode and a frame recording mode as an image recording mode, and an input image is recorded on a recording medium after being compressed in a field compression mode by an image compression/expansion device when the image recording mode is set to the field recording mode at the time of recording, while being recorded on the recording medium after being compressed in a frame compression mode by the image compression/expansion device when the image recording mode is set to the frame recording mode at the time of recording, a first video recorder/reproducer according to the present invention is characterized by comprising means for recording the image recording mode, together with compressed image data obtained by the image compression/expansion device on the recording medium at the time of recording, and means for reading out the image recording mode, together with the compressed image data, from the recording medium at the time of reproduction, and expanding, when the read image recording mode is the field recording mode, the read compressed image data in a field expansion mode by the image compression/expansion device, while expanding, when the read image recording mode is the frame recording mode, the read compressed image data in a frame expansion mode by the image compression/expansion device.

In a video recorder/reproducer, in which there are a field recording mode and a frame recording mode as an image recording mode, and an input image is recorded on a recording medium after being compressed in a field compression mode by an image compression/expansion device when the image recording mode is set to the field recording mode at the time of recording, while being recorded on the recording medium after being compressed in a frame compression mode by the image compression/expansion device when the image recording mode is set to the frame recording mode at the time of recording, a second video recorder/reproducer according to the present invention is characterized by comprising a circuit for recording the image recording mode, together with compressed image data obtained by the image compression/expansion device on the recording medium at the time of recording, and a circuit for reading out the image recording mode, together with the compressed image data, from the recording medium at the time of reproduction, and expanding, when the read image recording mode is the field recording mode, the read compressed image data in a field expansion mode by the image compression/expansion device, while expanding, when the read image recording mode is the frame recording mode, the read compressed image data in a frame expansion mode by the image compression/expansion device.

In a video recording/reproducing method, in which a field recording mode and a frame recording mode as an image recording mode, and an input image is recorded on a recording medium after being compressed in a field compression mode by an image compression/expansion device when the image recording mode is set to the field recording mode at the time of recording, while being recorded on the recording medium after being compressed in a frame compression mode by the image compression/expansion device when the image recording mode is set to the frame recording mode at the time of recording, a video recording/reproducing method according to the present invention is characterized by comprising the steps of recording the image recording mode, together with compressed image data obtained by the image compression/expansion device on the recording medium at the time of recording, and reading. out the image recording mode, together with the compressed image data, from the recording medium at the time of reproduction, and expanding, when the read image recording mode is the field recording mode, the read compressed image data in a field expansion mode by the image compression/expansion device, while expanding, when the read image recording mode is the frame recording mode, the read compressed image data in a frame expansion mode by the image compression/expansion device.

### Brief Description of Drawings

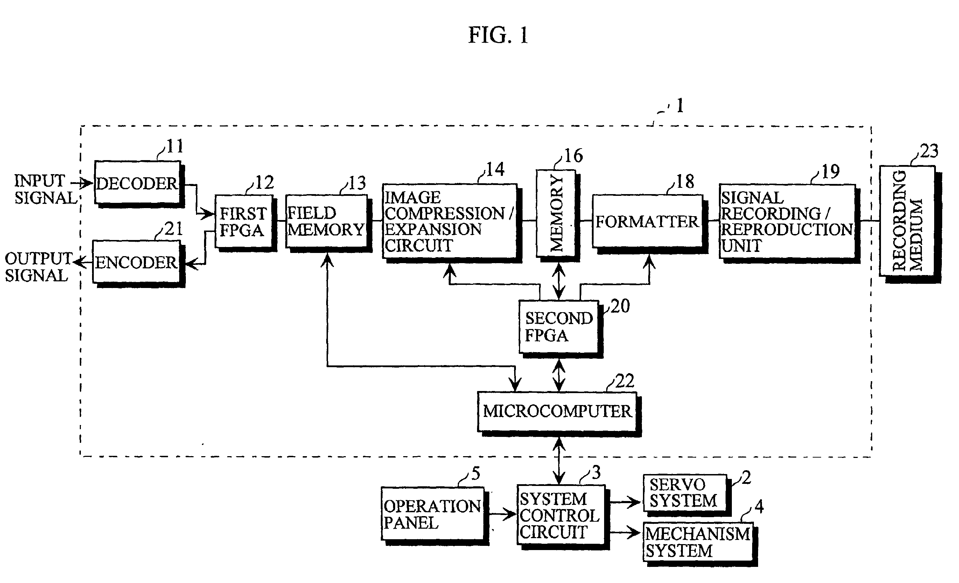

Fig. 1 is a block diagram showing the schematic configuration of a digital VTR.

### Best Mode for Carrying Out the Invention

Referring now to the drawing, description is made of an embodiment in a case where the present invention is applied to a digital VTR for recording and reproducing a video picked up by a monitoring camera.

Fig. 1 illustrates the configuration of the digital VTR. In Fig. 1, an audio signal processing circuit is omitted.

The digital VTR comprises a video signal processing circuit 1, a servo system (a drum servo system and a capstan servo system) 2, a system control circuit 3, a mechanism system 4, an operation panel 5, and so forth.

The video signal processing circuit 1 comprises a decoder (an A/D (Analog-to-Digital) converter) 11, a first FPGA (Field Programmable Gate Array) 12, a field memory 13, a JPEG system image compression/expansion circuit 14, a memory 16, a formatter 18, a signal recording/reproduction unit 19, a second FPGA 20, an encoder (a D/A (Digital-to-Analog Converter) 21, and a microcomputer 22.

The signal recording/reproduction unit 19 comprises a recording amplifier, a reproduction amplifier, and a video head. The image compression/expansion circuit 14, the memory 16, and the formatter 18 are controlled by the second FPGA 20. The first FPGA 12 and the second FPGA 20 are controlled by the microcomputer 22.

Description is made of operations at the time of recording. In this example, examples of the image recording mode include a field recording mode in which a recording unit is one field and a frame recording mode in which a recording unit is one frame. The image recording mode is inputted by the operation panel 5, and is set in the microcomputer 22 through the system control circuit 3.

At the time of recording, an analog video signal fed from a monitoring camera (video camera) is converted into digital image data by the decoder 11. The image data obtained by the decoder 11 is fed to the first FPGA 12.

The fist FPGA 12 stores the inputted image data in the field memory 13 in a image acceptance period corresponding to a video recording time mode set by a user. The image data stored in the field memory 13 is fed to the image compression/expansion circuit 14, is compressed by the image compression/expansion circuit 14, and is converted into coded data.

The microcomputer 22 sets the image compression/expansion circuit 14 in the field compression mode when the field recording mode is set. In this case, the image compression/expansion circuit 14 compresses the image data in the field compression mode. That is, the image compression/expansion circuit 14 captures the image data for each field, and compresses the captured image data.

The microcomputer 22 sets the image compression/expansion circuit 14 in the frame compression mode when the frame recording mode is set. In this case, the image compression/expansion circuit 14 compresses the image data in the frame compression mode. That is, the image compression/expansion circuit 14 captures the image data for each frame, and compresses the captured image data.

The second FPGA 20 adds additional information such as an image recording mode and recording time to the coded data obtained by the image compression/expansion circuit 14. The coded data having the additional information added thereto is written into the memory 16.

The data written into the memory 16 is read from the memory 16 and is fed to the formatter 18 every time the amount of the data reaches an amount corresponding to one block (a predetermined amount of data corresponding to a plurality of tracks), and is converted into data having a data structure which can be recorded on a video tape by the formatter 18.

The data obtained by the formatter 18 is recorded on a video tape (recording medium) 23 through a recording amplifier and a video head in the signal recording/reproduction unit 19.

Description is made of operations in a case where the image recording mode is switched during a recording operation.

When the image recording mode is switched from the field recording mode to the frame recording mode or is switched from the frame recording mode to the field recording mode during the recording operation, the compression mode in which the image compression/expansion circuit 14 is set must be switched. When the image recording mode is switched during the recording operation, therefore, the microcomputer 22 stops capturing and compressing operations performed by the image compression/expansion circuit 14. Further, the operation of the second FPGA 20 which accesses the image compression/expansion circuit 14 is stopped once, and is returned to its initial state. Thereafter, the microcomputer 22 sets the image compression/expansion circuit 14 to an image compression mode corresponding to a new image recording mode.

Description is made of operations at the time of reproduction. At the time of reproduction, the data read from the video tape 23 by a video head in the signal recording/reproduction unit 19 is temporarily stored in the memory 16 through a reproduction amplifier in the signal recording/reproduction unit 19 and the formatter 18. The second FPGA 20 acquires the additional information from the data stored in the memory 16. The additional information acquired by the second FPGA 20 is fed to the microcomputer 22.

The microcomputer 22 sets the image compression/expansion circuit 14 in a field expansion mode when the image recording mode included in the additional information is the field recording mode. In this case, the second FPGA 20 reads out data other than the additional information (the coded data compressed in the field compression mode) out of the data stored in the memory 16 for each field. The coded data for each field read out of the memory 16 is fed to the image compression/expansion circuit 14. The image compression/expansion circuit 14 expands the coded data fed in an image expansion mode set by the microcomputer 22, that is, the field expansion mode.

When the image recording mode included in the additional information is the frame recording mode, the microcomputer 22 sets the image compression/expansion circuit 14 in a frame expansion mode. In this case, the second FPGA 20 reads out for each frame the data other than the additional information (the coded data compressed in the frame compression mode) out of the data stored in the memory 16. The coded data for each frame read out of the memory 16 is fed to the image compression/expansion circuit 14. The image compression/expansion circuit 14 expands the coded data fed in the image expansion mode set by the microcomputer 22, that is, the frame expansion mode.

Digital image data obtained by the image compression/expansion circuit 14 is stored in the field memory 13 for each field irrespective of the image expansion mode. Image data corresponding to one field stored in the field memory 13 are read out by the first FPGA 12, and are fed to an encoder 21. The encoder 21 converts the fed image data into an analog video signal, and then feeds the analog video signal to a monitor (not shown).

When the image expansion mode in which the image compression/expansion circuit 14 is set is switched at the time of reproduction, the microcomputer 22 stops the expanding operation by the image compression/expansion circuit 14. Further, the operation of the second FPGA 20 which accesses the image compression/expansion circuit 14 is stopped once, and is returned to its initial state. Thereafter, the microcomputer 22 sets the image compression/expansion circuit 14 in an image expansion mode corresponding to a new image recording mode.

According to the above-mentioned embodiment, even when the image recording mode in which the image compression data read out of the recording medium is recorded is changed at the time of reproduction, the image expansion mode can be automatically switched, thereby making continuous reproduction possible.

## Claims

1. In a video recorder/reproducer, in which there are a field recording mode and a frame recording mode as an image recording mode, and an input image is recorded on a recording medium after being compressed in a field compression mode by an image compression/expansion device when the image recording mode is set to the field recording mode at the time of recording, while being recorded on the recording medium after being compressed in a frame compression mode by the image compression/expansion device when the image recording mode is set to the frame recording mode at the time of recording, a video recorder/reproducer being **characterized by** comprising:
means for recording the image recording mode, together with compressed image data obtained by the image compression/expansion device on the recording medium at the time of recording, and
means for reading out the image recording mode, together with the compressed image data, from the recording medium at the time of reproduction, and expanding, when the read image recording mode is the field recording mode, the read compressed image data in a field expansion mode by the image compression/expansion device, while expanding, when the read image recording mode is the frame recording mode, the read compressed image data in a frame expansion mode by the image compression/expansion device.

2. In a video recorder/reproducer, in which there are a field recording mode and a frame recording mode as an image recording mode, and an input image is recorded on a recording medium after being compressed in a field compression mode by an image compression/expansion device when the image recording mode is set to the field recording mode at the time of recording, while being recorded on the recording medium after being compressed in a frame compression mode by the image compression/expansion device when the image recording mode is set to the frame recording mode at the time of recording, a video recorder/reproducer being **characterized by** comprising:
a circuit for recording the image recording mode, together with compressed image data obtained by the image compression/expansion device on the recording medium at the time of recording, and
a circuit for reading out the image recording mode, together with compressed image data, from the recording medium at the time of reproduction, and expanding, when the read image recording mode is the field recording mode, the read compressed image data in a field expansion mode by the image compression/expansion device, while expanding, when the read image recording mode is the frame recording mode, the read compressed image data in a frame expansion mode by the image compression/expansion device.

3. In a video recording/reproducing method, in which there are a field recording mode and a frame recording mode as an image recording mode, and an input image is recorded on a recording medium after being compressed in a field compression mode by an image compression/expansion device when the image recording mode is set to the field recording mode at the time of recording, while being recorded on the recording medium after being compressed in a frame compression mode by the image compression/expansion device when the image recording mode is set to the frame recording mode at the time of recording, a video recording/reproducing method being **characterized by** comprising the steps of:
recording the image recording mode, together with compressed image data obtained by the image compression/expansion device on the recording medium at the time of recording, and
reading out the image recording mode, together with the compressed image data, from the recording medium at the time of reproduction, and expanding, when the read image recording mode is the field recording mode, the read compressed image data in a field expansion mode by the image compression/expansion device, while expanding, when the read image recording mode is the frame recording mode, the read compressed image data in a frame expansion mode by the image compression/expansion device.
